# EUROPÄISCHE PATENTSCHRIFT

(11) **EP 1 240 365 B1**
(45) Veröffentlichungstag und Bekanntmachung des Hinweises auf die Patenterteilung: **14.12.2005**
(21) Anmeldenummer: 00969496.9
(22) Anmeldetag: 13.10.2000
(51) Int. Cl.: C25D 3/56, C25D 3/16

(54) **VERFAHREN ZUR HERSTELLUNG EINES ELEKTROLYTISCH BESCHICHTETEN KALTBANDES UND DARAUS GEFERTIGTE BATTERIEHÜLSE**
METHOD FOR PRODUCING AN ELECTROLYTICALLY COATED COLD ROLLED STRIP AND BATTERY SHEATH PRODUCED THEREFROM
PROCEDE POUR PRODUIRE UN FEUILLARD LAMINE A FROID REVETU PAR VOIE ELECTROLYTIQUE ET GAINES DE PILES PRODUITES A PARTIR DE CELUI-CI

(30) Priorität: 14.10.1999 DE 19949549
(43) Veröffentlichungstag der Anmeldung: 18.09.2002
(73) Patentinhaber: Hille & Müller GmbH, 40589 Düsseldorf (DE)
(72) Erfinder: OLBERDING, Werner, 32553 Velbert (DE); PETRICK, Dagmar, 42719 Solingen (DE); SCHMIDT, Ferdinand, 40593 Düsseldorf (DE); STEINMANN, Hans-Günter, 40591 Düsseldorf (DE); PFEIFENBRING, Karlfried, 47249 Duisburg (DE)
(74) Vertreter: Stenger, Watzke & Ring
(86) Internationale Anmeldenummer: PCT/EP2000/010071
(87) Internationale Veröffentlichungsnummer: WO 2001/027355

(56) Entgegenhaltungen:
- GB-A- 1 510 079
- US-A- 3 922 209
- US-A- 3 969 399

## Beschreibung

Die Erfindung betrifft ein Verfahren zur Herstellung von Batteriehülsen, bei dem ein Kaltband auf elektrolytischem Wege mit einer Schicht aus Cobalt oder aus einer Cobaltlegierung versehen und zu einer Batteriehülse umgeformt wird, vorzugsweise durch Tiefziehen oder durch Abstreckziehen.

Zur Herstellung von Batteriehülsen gelangt vielfach elektrolytisch beschichtetes Kaltband zur Anwendung. Ein Kaltband sowie ein Verfahren zur Herstellung eines mit Nickel plattierten Kaltbandes, welches sich durch ein gutes Verhalten während des anschließenden Abstreckziehens (im englischen drawing and ironing) auszeichnet, ist in der EP 0 629 009 B1 beschrieben. Um bei der Herstellung der Batterien die wirksame Kontaktfläche zwischen der Innenfläche der Batteriehülse und dem Kathodenmaterial zu verbessem, wird bei der Herstellung jene Seite des Kaltbandes, welche später die Innenseite der Batteriehülse bildet, mit einer hartplattierten Nickelschicht versehen. Während des Abstreckziehens bilden sich in dieser Schicht Brüche, die zu der Kontaktflächenvergrößerung führen.

Ein ähnliches Bandmaterial ist in der EP 0 809 307 A2 beschrieben. Jene Seite des Bandmaterials, welche später die Innenseite der Batteriehülse bildet, wird mit einem harten Materialüberzug versehen, wohingegen die andere, später außen liegende Seite einen vergleichsweise weichen Materialüberzug erhält. Zur Erzielung des harten Metallüberzuges wird in dieser Druckschrift eine Galvanisierung mit einer Legierung auf Nickelbasis vorgeschlagen. Angegeben werden in der EP 0 809 307 A2 verschiedene Beispiele für die Härte der solcherart erzeugten Legierungen. Erwähnt wird auch die Möglichkeit, dem galvanischen Bad organische Zusätze beizugeben, jedoch werden in Bezug auf die Härteeigenschaften der mit diesen Bädern erzeugten Schichten keine Angaben gemacht. Die Hartschichten sollen beim späteren Verformen des Bleches zu Batteriehülsen zu Sprödbrüchen in den galvanischen Legierungsüberzügen und so im Ergebnis zu einer vergrößerten Oberfläche und einem daraus resultierenden verringerten elektrischen Kontaktwiderstand zwischen der Kathodensubstanz der Batterie und der Innenfläche der Batteriehülse führen.

Ganz generell ist die Verwendung von organischen Chemikalien in galvanischen Bädern bereits lange bekannt, wie z. B. das US-Patent 2,026,718 aus dem Jahr 1936 dokumentiert. In dieser Druckschrift ist beschrieben, dem galvanischen Bad zum Zwecke der Erzielung einer glänzenden Schicht aromatische Sulfosäuren zuzusetzen.

Auch die Verwendung von organischen Zusätzen in galvanischen Nickel-Cobalt- und Nickel/Cobalt-Bädern zur Herstellung von veredeltem Kaltband für die Herstellung von Batteriehülsen ist bereits bekannt. So ist in der DE 19 53 707 A1 ein Verfahren beschrieben, bei dem Nickel, Cobalt oder deren Legierungen abgeschieden werden, wobei ein ungesättigter, organischer Stoff wie z. B. Butindiol zugefügt wurde. In dieser Druckschrift wird die Abscheidung mit inerten Anoden in einem halogenfreien Bad bei Stromdichten von mindestens 83,8 A/dm² vorgeschlagen, wobei der Prozeß so geführt wird, daß spröde Niederschläge vermieden werden.

Schließlich ist es aus dem Stand der Technik bekannt, unter Zuhilfenahme von organischen Stoffen Cobalt aus einem galvanischen Bad abzuscheiden, um z. B. ferromagnetische Schichten für Datenträger zu bilden, siehe z. B. die US 4,756,816.

Aus der US-A-3,969,399 und der US-A-3,922,209 gehen als bekannt ferner Beschichtungen hervor, die ein duktiles Verhalten aufweisen.

Demgegenüber liegt der Erfindung die **Aufgabe** zugrunde, ein Verfahren zur Herstellung von Batteriehülsen zu entwickeln, mit dem sich bei der Herstellung von Batteriehülsen durch Tiefziehen oder Abstreckziehen nochmals geringere Werte für den elektrischen Kontaktwiderstand zwischen der Kathodensubstanz der Batterie und der Innenfläche der becherförmigen Batteriehülse erzielen lassen.

Zur **Lösung** dieser Aufgabe wird bei einem Verfahren der Eingangs genannten Art vorgeschlagen, daß bei der Beschichtung mit Cobalt oder der Cobaltlegierung dem Elektrolyten Abbauprodukte bildende organische Substanzen zugesetzt werden, daß diese Abbauprodukte und/oder Reaktionsprodukte dieser Abbauprodukte mit anderen Badbestandteilen gemeinsam mit dem Cobalt bzw. der Cobaltlegierung als spröde Schicht auf dem Bandmaterial abgeschieden werden, und daß die so gebildete spröde Beschichtung bei dem Umformen zu der Batteriehülse unter Bildung von Plättchen aufreißt, wobei die spröde Beschichtung auf einer darunter angeordneten, in einem vorherigen Schritt galvanisch aufgebrachten Schicht abgeschieden wird.

Ein solchermaßen hergestelltes Kaltband zeichnet sich dadurch aus, daß seine mit der elektrolytischen Beschichtung versehene Seite, sofern diese starken Umformkräften ausgesetzt wird, wie sie sich beim Tiefziehen oder Abstreckziehen z. B. zu einer Batteriehülse ergeben, einen besonders geringen elektrischen Kontaktwiderstand zeigt. Ursächlich hierfür ist das Aufreißen der spröden Schicht aus Cobalt bzw. einer Cobaltlegierung unter Bildung einzelner, durch Risse voneinander getrennter Plättchen. Durch diese Risse verringert sich der elektrische Kontaktwiderstand, weshalb sich das mit dem erfindungsgemäßen Verfahren hergestellte Band in besonderer Weise als Grundmaterial für die Herstellung von becherförmigen Batteriehülsen durch Tiefziehen oder Abstreckziehen eignet, und insbesondere für Batterien mit alkalischen Elektrolyten. Auf der Innenseite einer so hergestellten Batteriehülse ergeben sich im Vergleich zum Stand der Technik nochmals geringere Werte für den elektrischen Kontaktwiderstand zwischen der Kathodensubstanz der Batterie und der Innenfläche der Batteriehülse.

Zur Erzielung der gewünschten Sprödigkeit und zur Verbesserung der elektrischen Leitfähigkeit der galvanisch erzeugten Schicht sollten die Prozeßbedingungen vorzugsweise so gewählt werden, daß sich bei der elektrolytischen Beschichtung ein Cobalt-Anteil von größer 35 Gew.-% ergibt. Des weiteren ist es von Vorteil, wenn sich die Stromdichte des Elektrolytbades in einem relativ engen Bereich von nicht mehr als 10 A/dm² bewegt, vorzugsweise im Bereich zwischen 6 und 8 A/dm².

Von weiterer Bedeutung für das spätere Umformverhalten der gebildeten Elektrolytschicht ist auch der Chloridgehalt des Elektrolytbades. Dieser beträgt mehr als 24 g/l, vorzugsweise mehr als 30 g/l.

In weiterer bevorzugter Ausgestaltung wird vorgeschlagen, daß die Cobaltlegierung den Kontaktwiderstand der späteren, durch Umformen gebildeten Batteriehülse verringernde Zusätze an Nickel, Eisen, Zinn, Indium, Palladium, Gold und/oder Wismut enthält. Diese Zusätze können entweder als alleinige Beimengung oder in Beschichtungen aus mehr als zwei dieser Elemente verwendet werden.

Als Ausgangsmaterial für das Kaltband in besonderer Weise geeignet ist Stahl mit einem Kohleristoffgehält von weniger als 0,20 % mit einer Dicke bis zu 1 mm und vorzugsweise 0,1 - 0,7 mm. Nach der Erfindung wird die spröde Beschichtung auf einer darunter angeordneten, in einem vorab durchgeführten Galvanisierungsschritt abgeschiedenen Schicht abgeschieden. Diese unterhalb angeordnete Schicht ist vorzugsweise eine elektrolytisch aufgebrachte und anschließend zunächst diffusionsgeglühte Nickelschicht, die sich durch ein hervorragendes Korrosionsverhalten auszeichnet. Anschließend wird das Material dann mit der stark cobalthaltigen Schicht unter Einlagerung der Abbauprodukte der organischen Zusätze versehen. Bei der späteren Umformung infolge Tiefziehens oder Abstreckziehens reißt zwar die Cobaltschicht auf, jedoch reichen die Risse nicht bis zum Stahlsubstrat, sondern werden durch die darunterliegende duktile Nickelschicht aufgefangen, so daß der Widerstand gegen Korrosion erhalten bleibt.

In einer weiteren Variante wird auf die erfindungsgemäße, stark cobalthaltige Schicht eine weitere Beschichtung aufgebracht, die zu einer Verbesserung der Leitfähigkeit der Oberfläche einer durch Tiefziehen aus dem Bandmaterial gefertigten Batteriehülse führt. Hierfür geeignet sind z. B. Beschichtungen aus Gold oder Palladium. Auch bei dieser Variante des Kaltbandmaterials reißt beim späteren Tiefziehen oder Abstreckziehen die harte, spröde Cobaltbeschichtung auf, und zwar einschließlich der darauf befindlichen weiteren Beschichtung aus Gold oder Palladium. Auf diese Weise läßt sich der Vorteil der spröden Schicht in Bezug auf den elektrischen Kontaktwiderstand des Bandmaterials mit den Vorteilen einer besonders guten Leitfähigkeit der Oberfläche verbinden.

Desweiteren ist es möglich, vor der Herstellung der stark cobalthaltigen, spröden Schicht zunächst eine Schicht mit darin eingelagerten, elektrisch leitfähigen Partikeln, z. B. Kohlenstoffpartikeln aufzubringen. Das Aufreißen der Beschichtung führt in diesem Fall zu Rissen, die bis zu den elektrisch leitfähigen Partikeln in das Material hineinreichen, wodurch sich diese Partikel nunmehr partiell an der Oberfläche des Bandmaterials befinden. Bei dieser Variante werden die positiven Eigenschaften einer Beschichtung mit z. B. eingelagerten Kohlenstoffpartikeln in Bezug auf die Leitfähigkeit mit den voranstehend beschriebenen positiven Eigenschaften der beim Umformen aufreißenden, stark cobalthaltigen Beschichtung verknüpft.

In weiterer bevorzugter Ausgestaltung des erfindungsgemäßen Verfahrens wird vorgeschlagen, daß die Schicht aus Cobalt bzw. einer Cobaltlegierung auf beiden Seiten des Kaltbandes aufgebracht wird, daß beide Beschichtungen im selben Elektrolytbad, jedoch mit unterschiedlicher Stromdichte erfolgen, indem die Stromdichte bei der Beschichtung jener Seite, die später die Außenseite der Batteriehülse bildet, anders eingestellt ist als die Stromdichte bei der Beschichtung jener Seite, die später die Innenseite der Batteriehülse bildet. Die weitere Schicht auf der späteren Außenseite der Batteriehülse bringt erhebliche Vorteile beim Ziehen oder Abstreckziehen der Batteriehülse, da die Gefahr von Absetzungen von Partikeln am Tiefziehwerkzeug vermindert wird. Es werden also in einem Behandlungsschritt die guten Zieheigenschaften eines Bleches, welches mit einer Cobaltbeschichtung versehen wurde, mit den guten Eigenschaften im Bezug auf die Leistungsfähigkeit der späteren Batterie kombiniert, wie sie durch die spröde Beschichtung der späteren Innenseite erreicht werden.

Dieses Ergebnis kann auch erreicht werden, indem mindestens auf der Seite des Kaltbandes, die die spätere Außenseite der Batteriehülse darstellt, zunächst eine Schicht aufgebracht wird, bei welcher z. B. durch Zusatz eines Kornverfeinerungsmittels eine geringere Nickel-Korngröße eingestellt wird und das Material danach zunächst diffusionsgeglüht wird. Ein solches geeignetes Komverfeinerungsmittel ist z. B. Para-Toluolsulfonamid. In einem zweiten Behandlungsschritt wird nach dem Diffusionsglühen und gegebenenfalls einem Nachwalzen bzw. Dressieren auf jener Seite des Kaltbandes, welche die spätere Innenseite der Batteriehülse bildet, die oben beschriebene, spröde Schicht aus Cobalt oder einer Cobalt-Legierung aufgebracht. Das so hergestellte Material verbindet die für Tiefzieh- und Abstreckprozesse vorteilhaften Materialeigenschaften der Außenseite mit der erforderlichen excellenten Kontaktfähigkeit auf der Innenseite der späteren Batteriehülse.

Bei dem erfindungsgemäßen Verfahren zerfallen durch den während der galvanischen Beschichtung in dem Elektrolyten fließenden Strom die im Elektrolyten befindlichen organischen Zusätze zu Abbauprodukten. Diese Abbauprodukte können dann mit anderen Badbestandteilen, insbesondere Metallionen, reagieren. Die so gewonnenen Reaktionsprodukte werden gegebenenfalls zusammen mit anderen Abbauprodukten gemeinsam mit dem Cobalt oder der Cobaltlegierung auf dem Kaltband abgeschieden und bewirken eine Versprödung der Schicht. Im Falle schwefelhaltiger oder kohlenstoffhaltiger organischer Substanzen können diese Reaktionsprodukte beispielsweise Cobaltsulfide bzw. Cobaltcarbide sein.

Als organische Zusätze, welche dem stark cobalthaltigen Elektrolyt zugesetzt werden, eignen sich die aus der galvanischen Vernickelung bekannten Glanzmittel. Vorzugsweise eignen sich die auch als sekundäre Glanzmittel bezeichneten Glanzzusätze. In diese Gruppe fällt als typischer Vertreter Butindiol. Galvanische Niederschläge durch solche Zusätze zum Cobalt-Elektrolytbad führen zu einer sehr harten und zugleich spröden Beschichtung, wodurch das Material bei der späteren Umformung zu starker Rißbildung neigt. Die sich dabei einstellenden Risse zeichnen sich durch eine relativ gleichmäßige Struktur mit rautenförmiger Gestalt der einzelnen Rißplättchen aus.

In Versuchen hat sich nach dem Tiefziehen des erfindungsgemäß hergestellten Kaltbandes eine mittlere Kantenlänge zwischen 3 und 50 µm herausgestellt. Die Form und die Kantenlänge der erzeugten rautenförmigen Rißplättchen ist von entscheidender Bedeutung für die Leistungsfähigkeit der anschließend aus dem Bandmaterial hergestellten Batterien.

Von besonderem Vorteil ist hierbei, daß bei dem nach dem erfindungsgemäßen Verfahren hergestellten Kaltband die spröde Beschichtung während des Umformens zur Batteriehülse stets in einer Form aufreißt, bei der die Risse nicht in Längsrichtung der Batteriehülse, sondern in einem Winkel von ca. 45° hierzu verlaufen. Dies ist deshalb von besonderem Vorteil, weil bei der Fertigstellung der Batterien im allgemeinen eine Kathodenmasse in die Batteriehülse eingepreßt wird, die vorher zu sogenannten "Pellets" verpreßt wurde. Dies sind Ringe oder Scheiben aus einem Gemisch von Mangandioxid, Kohlenstoff, Kalilauge und einem Bindemittel. Beim Einpressen dieser Ringe in den Batteriebecher wird ein geeigneter Kontakt für die Ableitung der Elektronen angestrebt. Da bei dem nach dem erfindungsgemäßen Verfahren hergestellten Bandmaterial Risse unter einem Winkel von ca. 45° zur Errichtung der Verformung auftreten, kann sich beim Einsetzen der. Pellets ein Teil dieser Kathodenmasse in die unter dem Winkel zur Preßrichtung verlaufenden Risse hineinschieben. Dies führt zu einem besonders guten Kontakt der Kathodenmasse zu der Innenseite der Batteriehülse. Dieser Vorteil des verbesserten Kontaktes geht einher mit dem Vorteil einer guten Lagerfähigkeit einer Batteriehülse, die auf ihrer Innenseite mit Cobalt beschichtet ist. Im Ergebnis können Batterien hergestellt werden, welche sich nicht nur durch einen hervorragenden Kontakt der Kathodenmasse zur Innenseite der Batteriehülse aufgrund der aufgerissenen Oberfläche auszeichnen, sondern welche zusätzlich dazu noch eine ausgezeichnete Lagerfähigkeit aufgrund des verwendeten Cobalts besitzen. Sinngemäß gilt dies auch für eine vor dem Befüllen der Batteriehülse mit der Kathodenmasse auf diese Schicht aufgebrachte Graphitbeschichtung, wobei jedoch dann nicht der direkte Kontakt der Kathodenmasse zum Batteriebecher, sondern der Kontakt der Graphitbeschichtung zum Batteriebecher durch die stärkere Verankerung des Graphits auf der Innenseite des Batteriebechers verbessert wird.

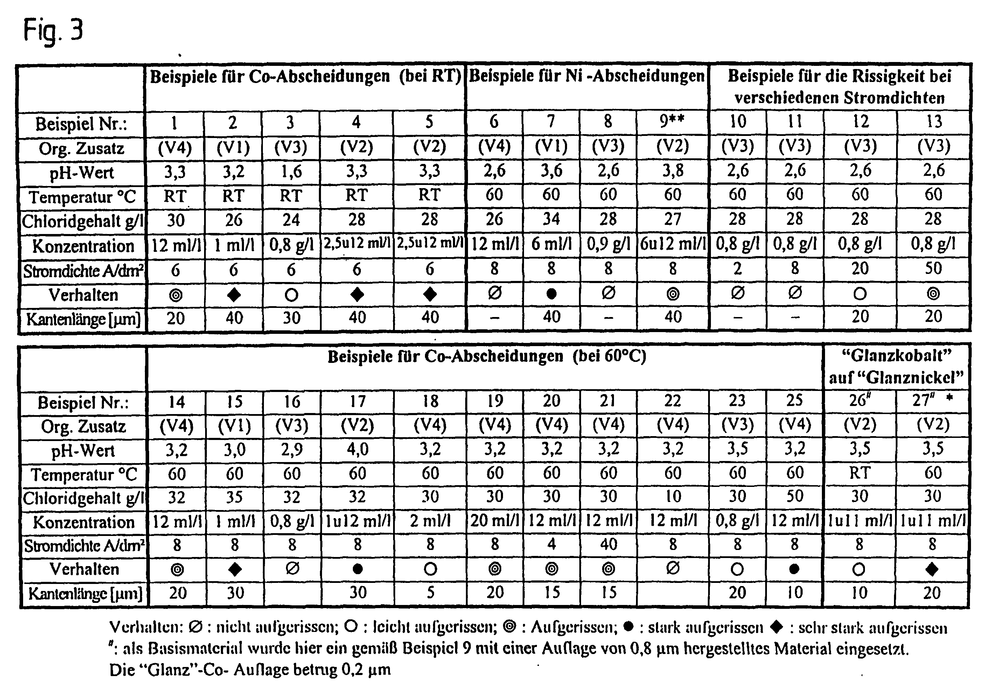

In der Fig. 3 sind in Tabellenform Beispiele von beschichteten Kaltbändem wiedergegeben, die unter Verwendung der erfindungsgemäßen Parameter hergestellt wurden. Die in Fig. 3 mit V1 bis V4 bezeichneten organischen Zusätze zum Elektrolytbad sind wie folgt:
- V1:: Butindiol
- V2:: Gemisch aus Butindiol und Saccharin. In Tabelle Fig. 3 bezieht sich in der Zeile "Konzentration" die erste Zahl auf die Konzentration an Butindiol, und die zweite Zahl auf die Konzentration an Saccharin.
- V3:: Paratoluolsulfonamid
- V4:: Saccharin.

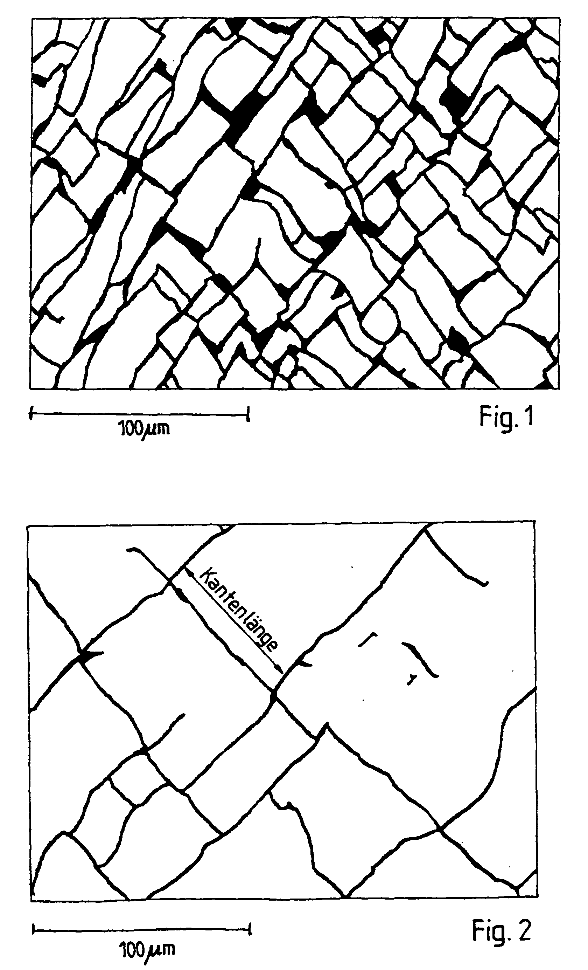

Ferner in Fig. 3 angegeben sind u. a. der pH-Wert, die Temperatur, der Chloridgehalt, die Konzentration und die Stromdichte des jeweils verwendeten Elektrolytbades. Schließlich angegeben ist in der Tabelle das jeweilige Verhalten des beschichteten Kaltbandes bei der späteren Umformung durch Ziehen oder Abstreckziehen sowie die mittlere Kantenlänge der beim Tiefziehen rautenförmig aufgeplatzten Rißplättchen. Diese Kantenlänge ist z. B. in Fig. 2 auch zeichnerisch dargestellt.

Auf der anliegenden Abbildung Fig. 1 ist stark vergrößert das Rißbild bei dem in Fig. 3 mit einem * bezeichneten Beispiel 27 dargestellt, in der Abbildung Fig. 2 das mit ** bezeichnete Beispiel 9.

## Patentansprüche

1. Verfahren zur Herstellung von Batteriehülsen, bei dem ein Kaltband auf elektrolytischem Wege mit einer Schicht aus Cobalt oder aus einer Cobaltlegierung versehen und zu einer Batteriehülse umgeformt wird, vorzugsweise durch Tiefziehen oder Abstreckziehen,
**dadurch gekennzeichnet,**
**daß** bei der Beschichtung mit Kolbalt oder der Cobaltlegierung dem Elektrolyten Abbauprodukte bildende organische Substanzen zugesetzt werden,
**daß** diese Abbauprodukte und/oder Reaktionsprodukte dieser Abbauprodukte mit anderen Badbestandteilen gemeinsam mit dem Cobalt bzw. der Cobaltlegierung als spröde Schicht auf dem Bandmaterial abgeschieden werden, und daß die so gebildete spröde Beschichtung bei dem Umformen zu der Batteriehülse unter Bildung von Plättchen aufreißt,
wobei die spröde Beschichtung auf einer darunter angeordneten, in einem vorherigen Schritt galvanisch aufgebrachten Schicht abgeschieden wird.

2. Verfahren nach Anspruch 1, **dadurch gekennzeichnet, daß** der Cobalt-Anteil in der elektrolytischen Beschichtung größer als 35 Gew.-% beträgt.

3. Verfahren nach Anspruch 2, **dadurch gekennzeichnet, daß** die Cobaltlegierung zur Verbesserung der elektrischen Leitfähigkeit der aus dem Kaltband durch Tiefziehen geformten Batteriehülsen Zusätze an Nickel, Eisen, Zinn, Indium, Palladium, Gold und/oder Wismut enthält.

4. Verfahren nach einem der vorangehenden Ansprüche, **gekennzeichnet durch** Verwendung eines Stahls mit einem Kohlenstoffgehalt von weniger als 0,2 % und mit einer Dicke bis zu 1 mm als metallisches Trägermaterial.

5. Verfahren nach einem der Ansprüche 1 bis 4, **dadurch gekennzeichnet, daß** die unterhalb der spröden Beschichtung angeordnete Schicht eine elektrolytisch aufgebrachte Nickelschicht ist, die nach ihrem Aufbringen zunächst diffusionsgeglüht wird.

6. Verfahren nach Anspruch 5, **dadurch gekennzeichnet, daß** beim elektrolytischen Aufbringen der Nickelschicht dem galvanischen Bad ein Kornverfeinerungsmittel, wie zum Beispiel Para-Toluolsulfonamid, zugesetzt wird.

7. Verfahren nach einem der Ansprüche 1 bis 6, **dadurch gekennzeichnet, daß** die spröde Beschichtung auf einer darunter angeordneten, eingelagerte elektrisch leitfähige Partikel enthaltenden Schicht abgeschieden wird.

8. Verfahren nach Anspruch 7, **gekennzeichnet durch** Kohlenstoffpartikel als elektrisch leitfähige Partikel.

9. Verfahren nach einem der vorangehenden Ansprüche, **dadurch gekennzeichnet, daß** die organischen Elektrolytbadzusätze, deren Abbauprodukte und/oder Reaktionsprodukte aus Reaktionen dieser Abbauprodukte mit anderen Badbestandteilen in die Beschichtung eingebaut werden, Glanzzusätze (sogenannte sekundäre Glanzmittel) sind.

10. Verfahren nach Anspruch 9, **dadurch gekennzeichnet, daß** die Glanzzusätze Butindiol mit/ohne Zusatz von o-Benzoesäuresulfimid (Saccharin) sind.

11. Verfahren nach einem der vorangehenden Ansprüche, **dadurch gekennzeichnet, daß** die Stromdichte des Elektrolytbades unter 10 A/dm², vorzugsweise 6 bis 8 A/md², beträgt.

12. Verfahren nach einem der vorangehenden Ansprüche, **dadurch gekennzeichnet, daß** der Chloridgehalt des Elektrolytbades größer als 30 g/l beträgt.

13. Verfahren nach einem der vorangehenden Ansprüche, **dadurch gekennzeichnet, daß** die Schicht aus Cobalt bzw. einer Cobaltlegierung auf beiden Seiten des Kaltbandes aufgebracht wird, daß beide Beschichtungen im selben Elektrolytbad, jedoch mit unterschiedlicher Stromdichte erfolgen, wobei die Stromdichte bei der Beschichtung jener Seite, die später die Außenseite der Batteriehülse bildet, anders eingestellt ist, als die Stromdichte bei der Beschichtung jener Seite, die später die Innenseite der Batteriehülse bildet.

14. Batteriehülse, **dadurch gekennzeichnet, daß** sie aus einem nach einem Verfahren nach einem der Ansprüche 1 bis 13 hergestellten Kaltband durch Umformen getertigt ist.

## Claims

1. A method of manufacturing battery sleeves, in which a cold rolled strip is provided electrolytically with a layer of cobalt or a cobalt alloy and is deformed to constitute a battery sleeve, preferably by deep drawing or ironing, **characterised in that** when coating with cobalt or the cobalt alloy, organic substances forming decomposition products are added to the electrolyte, that these decomposition products and/or reaction products of these decomposition products with other tank components are deposited together with the cobalt or the cobalt alloy onto the strip material in the form of a brittle layer and that the brittle coating thus formed cracks during the deformation into the battery sleeve whilst forming platelets, wherein the brittle coating is deposited onto a layer arranged beneath it and galvanically applied in a preceding step.

2. A method as claimed in Claim 1 **characterised in that** the cobalt content in the electrolytic coating is greater than 35% by wt.

3. A method as claimed in Claim 2, **characterised in that** the cobalt alloy for improving the electrical conductivity of the battery sleeves formed from the cold rolled strip by deep drawing contains additions of nickel, iron, tin, indium, palladium, gold and/or bismuth.

4. A method as claimed in one of the preceding claims, **characterised by** use of a steel with a carbon content of less than 0.2% and with a thickness up to 1 mm as metallic carrier material.

5. A method as claimed in one of Claims 1 to 4, **characterised in that** the layer disposed beneath the brittle coating is an electrolytically applied nickel layer which, after its application, is firstly diffusion annealed.

6. A method as claimed in Claim 5, **characterised in that** in the electrolytic application of the nickel layer, a grain refining agent, such as para-toluolsulphonamide, is added to the galvanic tank.

7. A method as claimed in one of Claims 1 to 6, **characterised in that** the brittle layer is deposited on a layer disposed beneath it containing embedded, electrically conductive particles.

8. A method as claimed in Claim 7, **characterised by** carbon particles as the electrically conductive particles.

9. A method as claimed in one of the preceding claims, **characterised in that** the organic electrolyte tank additives, whose decomposition products and/or reaction products from reactions of the decomposition products with other tank components are incorporated into the coating are brightening additives (so-called secondary brighteners).

10. A method as claimed in Claim 9, **characterised in that** the brightening additives are butynediol with/without the addition of o-benzosulfimide (saccharine).

11. A method as claimed in one of the preceding claims, **characterised in that** the current density of the electrolytic tank is less than 10A/dm², preferably 6 to 8 A/dm².

12. A method as shown in one of the preceding claims, **characterised in that** the chloride content of the electrolytic tank is greater than 30g/l.

13. A method as claimed in one of the preceding claims, **characterised in that** the layer of cobalt or a cobalt alloy is applied to both sides of the cold rolled strip, that both coatings are effected in the same electrolytic tank but with a different current density, whereby the current density when coating that side, which subsequently constitutes the outer surface of the battery sleeve, is set to be different to the current density when coating that side, which subsequently constitutes the inner surface of the battery sleeve.

14. A battery sleeve, **characterised in that** it is produced from a cold rolled strip manufactured by deformation in accordance with a method as claimed in one of Claims 1 to 13.

## Revendications

1. Procédé pour produire des gaines de batterie, dans lequel un feuillard laminé à froid est revêtu par voie électrolytique d'une couche de cobalt ou d'un alliage de cobalt et mis en forme pour obtenir une gaine de batterie, de préférence par emboutissage profond ou étirage, **caractérisé en ce que** lors de l'application du revêtement en cobalt ou alliage de cobalt, l'électrolyte est additionné de substances organiques formant des produits de décomposition, **en ce que** ces produits de décomposition et/ou les produits de réaction de ces produits de décomposition avec d'autres composants du bain se déposent avec le cobalt ou l'alliage de cobalt sous la forme d'une couche friable sur le matériau du feuillard, et **en ce que** le revêtement friable ainsi obtenu se craquèle en formant des plaquettes lors du formage produisant une gaine de batterie, le revêtement friable étant déposé sur une couche sous-jacente et appliquée au préalable par galvanisation.

2. Procédé selon la revendication 1, **caractérisé en ce que** la part de cobalt dans le revêtement électrolytique est supérieure à 35 % du poids.

3. Procédé selon la revendication 2, **caractérisé en ce que** l'alliage de cobalt contient, pour améliorer la conductivité électrique de la gaine de batterie formée par emboutissage à partir du feuillard, des ajouts de nickel, de fer, d'étain, d'indium, de palladium, d'or et/ou de bismuth.

4. Procédé selon l'une quelconque des revendications précédentes, **caractérisé par** l'utilisation d'un acier ayant une teneur en carbone inférieure à 0,2 % et d'une épaisseur maximale de 1 mm comme le matériau de substrat métallique.

5. Procédé selon l'une quelconque des revendications 1 à 4, **caractérisé en ce que** la couche sous-jacente au revêtement friable est une couche de nickel appliquée par électrolyse et recuite au préalable par diffusion après son application.

6. Procédé selon la revendication 5, **caractérisé en ce que** lors de l'application par électrolyse de la couche de nickel, le bain de galvanisation est additionné d'un moyen de réduction de la taille des grains, par exemple de para-toluène-sulfonamide.

7. Procédé selon l'une quelconque des revendications 1 à 6, **caractérisé en ce que** le revêtement friable est déposé sur une couche disposée au-dessous et contenant des particules conductrices électriques incluses.

8. Procédé selon la revendication 7, **caractérisé en ce que** les particules conductrices électriques sont des particules de carbone.

9. Procédé selon l'une quelconque des revendications précédentes, **caractérisé en ce que** les additifs organiques du bain d'électrolyse dont les produits de décomposition et/ou les produits de réaction résultant des réactions de ces produits de décomposition avec d'autres composants du bain sont intégrés dans le revêtement, sont des additifs de brillantage (agents de brillantage secondaires).

10. Procédé selon la revendication 9, **caractérisé en ce que** les agents de brillantage sont du butynediol avec ou sans addition d'ortho-benzosulfimide (saccharine).

11. Procédé selon l'une quelconque des revendications précédentes, **caractérisé en ce que** la densité de courant du bain d'électrolyse est inférieure à 10 A/dm², de préférence de 6 à 8 A/dm².

12. Procédé selon l'une quelconque des revendications précédentes, **caractérisé en ce que** la teneur en chlorure du bain d'électrolyse est supérieure à 30 g/1.

13. Procédé selon l'une quelconque des revendications précédentes, **caractérisé en ce que** la couche de cobalt ou d'alliage de cobalt est appliquée des deux côtés du feuillard, **en ce que** les deux revêtements sont produits dans un même bain d'électrolyse mais à une densité de courant différente, la densité de courant pour le revêtement du côté qui formera ultérieurement l'extérieur de la gaine de batterie étant différente de la densité de courant pour le revêtement du côté qui formera ultérieurement l'intérieur de la gaine de batterie.

14. Gaine de batterie, **caractérisée en ce qu'**elle est fabriquée par formage à partir d'un feuillard laminé à froid fabriqué par un procédé selon l'une quelconque des revendications 1 à 13.
